(19) Europäisches Patentamt / European Patent Office / Office européen des brevets

(11) **EP 4 621 654 A1**

(12) **EUROPEAN PATENT APPLICATION**

(43) Date of publication:
**24.09.2025 Bulletin 2025/39**

(21) Application number: **24382303.6**

(22) Date of filing: **20.03.2024**

(51) International Patent Classification (IPC):
**G06N 3/084** (2023.01)    **G06N 3/098** (2023.01)

(52) Cooperative Patent Classification (CPC):
**G06N 3/084; G06N 3/098**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Airbus Defence and Space SAU
28906 Getafe (ES)**

(72) Inventor: **RODRÍGUEZ ROBLES, Rodney
28906 Getafe (ES)**

(74) Representative: **Elzaburu S.L.P.
Edificio Torre de Cristal
Paseo de la Castellana 259 C, planta 28
28046 Madrid (ES)**

(54) **COMPUTER IMPLEMENTED METHOD FOR ADAPTIVE CONTROL IN AN AIRBORNE FLYING CONTROL SYSTEM**

(57)    Computer implemented method for adaptive control in an airborne flying control system, the method being indicated for avoiding the drifting phenomenon occurring when different computers (1) with artificial neural networks (ANNs) are used to learn and adapt the algorithm for determining a particular aircraft related variable during a flight, the method comprising, at each time step of determination of the aircraft related variable, feeding each computer (1) with the mean value of the aircraft related variable calculated by all of the computers (1) of the airborne flying control system at the previous time step.

FIG. 2

EP 4 621 654 A1

## Description

### Technical field

The present invention is directed to a computer implemented method for adaptive control in an airborne flying control system, specially indicated for avoiding the drifting phenomenon occurring when different computers with artificial neural networks (ANN) are used to learn and adapt the algorithm for determining a particular aircraft related variable.

This invention is preferably applicable in the field of safety critical adaptive (online learning) systems (i.e. Flight Control Computers) with fault tolerant redundant architectures (duplex, triples, quadrupled and so on).

### Background of the invention

Today, countless industrial and technological applications have benefited from the latest advances in the field of Artificial Intelligence (AI), from mobile applications that put you in the shoes of Robert Downey Jr. in an Iron Man movie scene, to planes that take off and land autonomously using image recognition algorithms to detect the position of the runway.

However, in most practical applications, the neural networks have been previously trained offline, and in the deployment and industrialization stage, their parameters, weights, and architecture are frozen. In other words, these neural networks are static, and their ability to learn during their in-service life has been restricted.

Off-line training has many advantages with respect to online training:

- More computing power is available to train large models during the development phase. Usually, the hardware running the final version of the embedded neural network has fewer performances than the hardware used in the training process.

- Overfitting and other well-known issues that appear during the neural network's training can be detected early in the development phase.

- The predictions of a neural network trained offline are deterministic. Thus, the validation and verification cycle are much more straightforward for an off-line trained neural network than that of an online trained neural network. There are serious issues on how to grant that the neural network predictions do not diverge to wrong values with time.

- No one would want that, due to poor learning during the neural network's in-service life, it will begin to provide incorrect predictions with a higher failure rate than stipulated. Depending on the application, like in safety-critical systems, these performance deviations might lead to catastrophic outcomes.

Nevertheless, to be able to train a neural network offline, there is an essential requirement-we need to have a sufficiently large database where the relationships between the neural network's inputs and outputs are unequivocally defined.

However, what happens if, in our particular application, we don't know a priori what is the relationship between the neural network's inputs and outputs, and this relationship can only be obtained in real-time by doing a test?

This is the particular case of the neural networks of adaptive controllers (in embedded systems), which use the experience acquired in real-time to readjust the internal parameters of the controller's neural network, to render the response of the controlled vehicle as close as possible to that of a reference system which is considered optimal from the handling qualities' point of view.

Adaptive controllers are kind of magical. They're a category of controllers that are really good at adapting over time with incredible resiliency, and thus very handy for controlling complex systems with unknown dynamics.

Most adaptive control techniques use single-layer artificial neural networks (ANNs) to estimate the unknown nonlinearities and malfunctions that could make the system depart from its nominal dynamics.

The output of this single-layer ANN used by an adaptive controller is usually represented by $K = W\phi(x)$, being the activation functions and weights denoted by $\phi(x)$ and $W$ respectively.

It's customary for the activation functions of every adaptive control application to be dependent on the system's state vector "x". Depending on this law, the closed-loop adaptive system-the plant plus the controller - might become stable or unstable, and thus specific design and performance criteria need to be respected when defining the ANN's learning law.

Unlike off-line learning techniques applied to ANN, like stochastic gradient descent, dropout, normalisation, and so on, online learning laws for adaptive systems require specific ad-hoc methodologies that depend on the target system's dynamics.

The most common learning laws used in Model Reference Adaptive Control (MRAC) are based on the so called

**EP 4 621 654 A1**

"MIT rule" plus a robustifying modification term, like the σ, ε, or optimal robust modifications.

$$\dot{W} = -\Gamma\left(\phi(x)\, e^T(t)PB + \sigma\, W\right), \qquad \sigma > 0$$

(MIT rule + σ Rubustifying Modification)

$$\dot{W} = -\Gamma\left(\phi(x)\, e^T(t)PB + \mu\|\, e^T(t)PB\,\|W\,\right), \ \mu > 0$$

(MIT rule + ε Rubustifying Modification)

$$\dot{W} = -\Gamma\left(\phi(x)\, e^T(t)PB - \nu\,\phi(x)\,\phi^T(x)\,WB^T\,PA_m^{-1}\,B\,\right), \ \nu > 0$$

$$\left(\text{MIT rule + Optimal Rubustifying Modification}\right)$$

A drawback derived from the strict proper stabilisation criterion that renders these ANN's learning laws is that none of them grants the convergence of the ANN's weights W to the optimal values.

This is, the previous learning laws can grant the stability of the closed-loop system but do not grant the ANN to provide an accurate prediction about the system's unknown nonlinear dynamics.

This type of adaptive algorithms, when embedded in safety critical applications with redundant architectures like duplex, triplex and quadruplex, can suffer from a phenomenon called parameter drifting.

The parameter drifting occurs when a local computer starts to learn different weights W for its local ANN model, and the output of the ANN model drifts from their neighbour models running in the rest of computers. The parameter drifting phenomenon can occur either by a wrong voting of the input signals feeding the redundant architecture of safety critical computers, due to electronic noise in the signals, or due to asynchronies and delays in the Cross Channel Data Link (CCDL) between the computers.

If the parameter drifting is not detected and the weights of the ANN model are misaligned between the different computers that are learning online, a given computer can be assigned as faulty due to discrepancies of its outputs with respect to the rest of its neighbours.

In order to have an ANN model learning online in redundant architectures in safety critical adaptive systems (i.e. Flight Control Computers (FCC)), a proper learning strategy must be implemented to achieve a consensus between the online learning of each ANN model within the computers.

**Summary of the invention**

With the aim of providing a solution to the abovementioned problems, the present invention refers to a computer implemented method for adaptive control in an airborne flying control system.

The computer implemented method for adaptive control in an airborne flying control system, according to the present invention, comprises using a plurality of computers (e.g. safety critical computers of an airborne flying control system) for adaptive control using the estimation ($\hat{K}$) of at least one aircraft related variable (K), being determined according to an identification algorithm in accordance with the following expression defining the output of an ANN model:

$$\hat{K}_i = \Phi(x_i) * \widehat{W}^i$$

wherein

$\hat{K}_i$ is an estimated aircraft related variable which is the output from the ANN model from each computer "i" of the airborne flying control system;

Φ are the activation functions of the ANN of each computer "i";

$x_i$ is the state vector input to computer "i", which is the input to the ANN model, describing the actual aircraft's state influencing the aircraft related variable ($\hat{K}$), and;

3

$\hat{W}^i$ are the weights of the ANN of each computer "i", which in combination with the activation functions $\Phi$, determine the estimated aircraft related variable ($\hat{K}$).

Each computer "i" embeds an artificial neural network (ANN) with adaptable weights $(\widehat{W}^i)$ sharing the same type of activation functions $\Phi$.

In a novel manner, the computer implemented method for adaptive control in an airborne flying control system, according to the present invention, comprises performing the adaptation of the weight $(\widehat{W}^i)$ used by the the ANN model of each computer by taking into consideration each and every of the output values of the estimated aircraft related variable ($\hat{K}_i$) provided by the rest of the computers "i" of the airborne flying control system.

Thanks to this novel approach, the drifting phenomenon leading to significantly different weights $(\widehat{W}^i)$ used by the ANN of each computer "i" for determining an estimated aircraft related variable is avoided, since each computer "i" is fed with the mean of the ANN output of each computer, and during the update of the ANN weights, the consensus learning mechanism steers the output of every ANN model running in each computer towards a consensus mean.

According to a preferred embodiment of the invention, the adaptation of the ANN weights $(\widehat{W}^i)$ in each computer is performed in accordance with the following expression:

$$\frac{d\widehat{W}^i}{dt} = -\lambda * e * \Phi(x_i) + C\big(\overline{K} - \Phi(x_i) * \widehat{W}^i\big) * \Phi(x_i)$$

wherein

$\dfrac{d\widehat{W}^i}{dt}$ is the time derivative of the weight $(\widehat{W}^i)$ between different execution time steps;

$\lambda$ is the learning gain for the artificial neural network weights $(\widehat{W}^i)$;

e is the artificial neural network identified error at the execution time step (expected ANN output minus current ANN output defined by $\Phi(x_i) * \hat{W}^i$);

C is the consensus learning gain, and;

$\overline{K}$ is mean output value of the artificial neural network from all computers of the airborne flying control system.

According to one further aspect of the present invention, the present invention further refers to a computer program for adaptive control in an airborne flying control system comprising instructions that, when executed in a plurality of computers of an airborne flying control system, cause the plurality of computers to execute the computer implemented method described above.

According to one further aspect of the present invention, the present invention further refers to a computer readable medium comprising instructions that, when executed in a plurality of computers of an airborne flying control system, cause the plurality of computers to execute the computer implemented method described above.

**Brief description of the drawings**

As a means for better understanding at least one embodiment of the present invention, the following set of drawings is introduced by way of schematic illustration and in a non-limitative manner.

Figure 1: Shows a schematic view of four safety critical computers which are part of an airborne flying control system of an aircraft.

Figure 2: Shows a schematic view of the four safety critical computers of Figure 1, part of an airborne flying control system of an aircraft in which a mean value calculation module has been incorporated for the implementation of the computer implemented method according to the present invention.

Figure 3: Shows a chart illustrating the evolution of the values of an aircraft related variable determined by four different computers of an airborne flying control system, with and without applying the computer implemented method of the present invention.

Figure 4: Shows a chart illustrating the evolution of the maximum difference between the values of an aircraft related variable determined by four different computers of an airborne flying control system, with and without applying the computer implemented method of the present invention.

**Detailed description**

The present invention, as already introduced, refers to a computer implemented method for adaptive control in an airborne flying control system.

An airborne flying control system may comprise one or more safety critical computers (1).

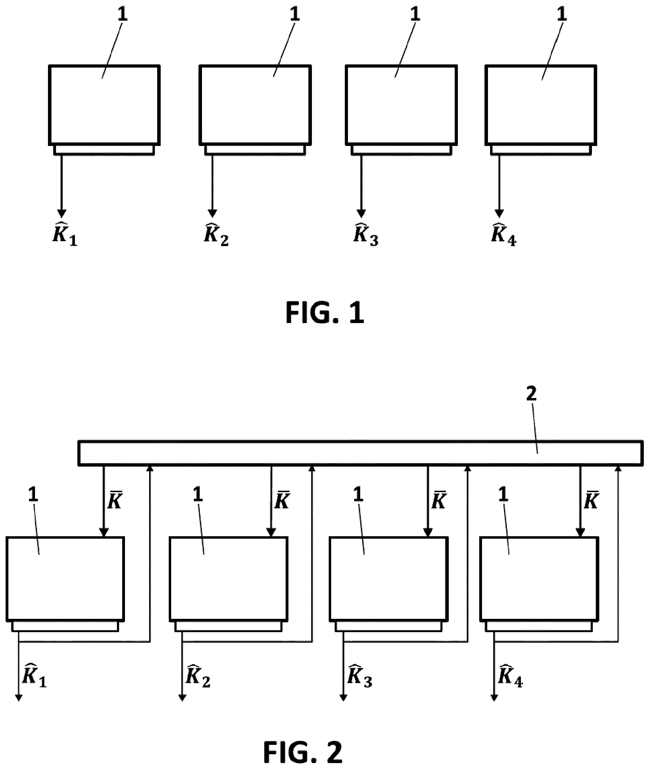

Figure 1 schematically depicts part of an airborne flying control system; more precisely, Figure 1 schematically depicts four safety critical computers (1) which are part of an airborne flying control system.

This safety critical computers (1) perform an adaptive control of many aircraft flying systems and/or devices (not shown in the Figures).

This safety control comprises estimating, by each computer "i" of the airborne flying control system, at least one aircraft related variable ($\hat{K}_i$) relevant for the control of the aircraft and/or for the control of the flight.

The computer implemented method of the present invention comprises applying a consensus term to the loss function (C) used by the basic AI model weight's update law (usually based on gradient descent techniques) in the different safety critical computers (1) where the AI models are trained. This consensed real-time training strategy generates coordination in the learning process and grants that the discrepancies in the neural network weights ($\hat{W}^i$) within each computer (1) are always kept small, thus aligning the output of each AI model within each computer (1) in real-time.

The consensus term that should be added to the loss function can range from a first order linear term, up to an $n^{th}$ order consensus term.

According to the computer implemented method of the present invention, a consensus term based on the estimated mean value ($\overline{K}$) of a particular estimated aircraft related variable ($\hat{K}_i$) provided by each computer (1) of the airborne flying control system is applied.

$$\hat{K}_i = \Phi(x_i) * \hat{W}^i$$

$$\frac{d\hat{W}^i}{dt} = - \overbrace{\lambda * e * \Phi(x_i)}^{Update\ Law} + \overbrace{C(\overline{K} - \hat{K}_i) * \Phi(x_i)}^{Consensus\ Term}$$

Figure 2 shows a schematic view of the four safety critical computers of Figure 1, part of an airborne flying control system of an aircraft.

In the airborne flying control system relating to Figure 2, a mean value calculation module (2) has been incorporated for the implementation of the computer implemented method according to the present invention.

According to a particular embodiment of the present invention, the computer implemented method for adaptive control in an airborne flying control system comprises the following steps:

a) At each time step, measure the output the AI model of each safety critical computer $\hat{K}_i$

b) Via a cross channel data link function, compute the mean of the AI models' outputs $\overline{K}$

c) Feed the mean output from the previous computation step ($\overline{K}$) to each safety critical Computer

d) Within the weights update law of each AI model, use the previously computed output mean and compare it with the local Ai model output in the previous time step

e) Add the discrepancy between the local AI model and the mean output to the instantaneous loss function used in the update law

f) Update the local AI model weights using its update law with the consensed loss function

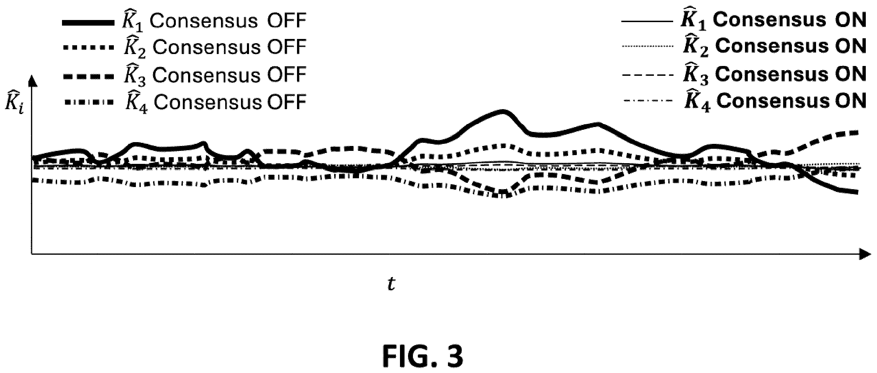

Figure 3 shows a chart illustrating the evolution of the values provided by an ANN representing an aircraft related variable ($\hat{K}_i$) determined by four different computers (1) of an airborne flying control system.

Figure 3 depicts, with thick lines, the evolution of the values of an estimated aircraft related variable ($\hat{K}_i$) determined by four different computers (1) of an airborne flying control system without applying ("Consensus OFF") the computer implemented method of the present invention.

Figure 3 depicts, with continuous lines, the evolution of the values of an estimated aircraft related variable ($\hat{K}_i$) determined by four different computers (1) of an airborne flying control system when applying ("Consensus ON") the computer implemented method of the present invention.

As it is clearly seen from Figure 3, when applying the computer implemented method of the present invention, the evolution of the values of an estimated aircraft related variable ($\hat{K}_i$) determined by each of the four different computers (1) considered for the airborne flying control system is almost the same.

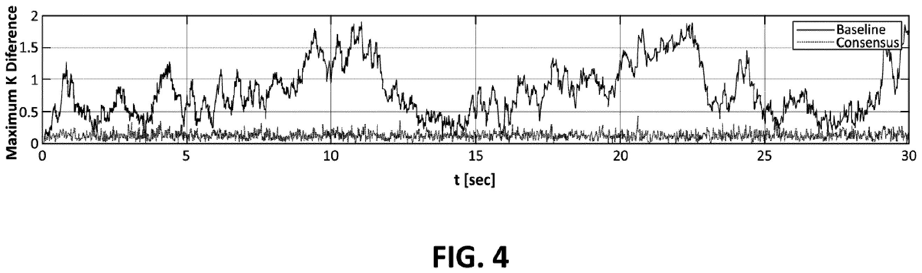

Figure 4 depicts, with a continuous line, the evolution of the maximum difference between the values of an estimated aircraft related variable ($\hat{K}_i$) determined by four different computers of an airborne flying control system, without applying ("Baseline") the computer implemented method of the present invention.

Figure 4 depicts, with a dashed line, the evolution of the maximum difference between the values of an estimated aircraft related variable ($\hat{K}_i$) determined by four different computers of an airborne flying control system, when applying ("Consensus") the computer implemented method of the present invention.

As it is clearly seen from Figure 4, when applying the computer implemented method of the present invention, the maximum difference between the values of an estimated aircraft related variable ($\hat{K}_i$) determined by each of the four different computers (1) considered for the airborne flying control system is almost zero.


**Claims**

1.  Computer implemented method for adaptive control in an airborne flying control system, the computer implemented method comprising using a plurality of computers (1) for adaptive control using the estimation ($\hat{K}$) of at least one aircraft related variable (K), being determined according to an identification algorithm in accordance with the following expression defining the output of an ANN model:

$$\hat{K}_i = \Phi(x_i) * \widehat{W}^i$$

    wherein

    $\hat{K}_i$ is an estimated aircraft related variable which is the output from the ANN model from each computer "i" of the airborne flying control system;
    $\Phi$ are the activation functions of the ANN of each computer "i";
    $x_i$ is the state vector input to computer "i", which is the input to the ANN model, describing the actual aircraft's state influencing the aircraft related variable ($\hat{K}$), and;
    $\widehat{W}^i$ are the weights of the ANN of each computer "i", which in combination with the activation functions $\Phi$, determine the estimated aircraft related variable ($\hat{K}$).

    wherein each computer "i" embeds an artificial neural network (ANN) with adaptable weights $\widehat{(W^i)}$ sharing the same type of activation functions $\Phi$.

    **characterized in that** it comprises performing an adaptation of the weight $\widehat{(W^i)}$ used by the ANN model of each computer (1) by taking into consideration each and every of the output values of the estimated aircraft related variable ($\hat{K}_i$) by the rest of the computers (1) of the airborne flying control system.

2.  Computer implemented method for adaptive control in an airborne flying control system according to claim 1, **characterized in that** the adaptation of the ANN weights $\widehat{(W^i)}$ in each computer (1) is performed in accordance with the following expression:

$$\frac{d\widehat{W}^i}{dt} = -\lambda * e * \Phi(x_i) + C(\bar{K} - \Phi(x_i) * \widehat{W}^i) * \Phi(x_i)$$

wherein

$\frac{d\widehat{W}^i}{dt}$ is the time derivative of the weight $\left(\widehat{W}^i\right)$ between different execution time steps;

$\lambda$ is the learning gain for the artificial neural network weights $\left(\widehat{W}^i\right)$;
$e$ is the artificial neural network identified error at the execution time step
$C$ is the consensus learning gain;
$\overline{K}$ is mean output value of the artificial neural network from all computers of the airborne flying control system.

3. Computer program for adaptive control in an airborne flying control system **characterized in that** it comprises instructions that, when executed in a plurality of computers (1) of an airborne flying control system, cause the plurality of computers (1) to execute the computer implemented method of claim 1 or 2.

4. Computer readable medium **characterized in that** it comprises instructions that, when executed in a plurality of computers (1) of an airborne flying control system, cause the plurality of computers (1) to execute the computer implemented method of claim 1 or 2.

**FIG. 1**

**FIG. 2**

**FIG. 3**

EP 4 621 654 A1

FIG. 4

Europäisches
Patentamt
European
Patent Office
Office européen
des brevets

# EUROPEAN SEARCH REPORT

**Application Number**

EP 24 38 2303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHABBIR WASIF ET AL: "Neural network-based sensor fault estimation and active fault-tolerant control for uncertain nonlinear systems", JOURNAL OF THE FRANKLIN INSTITUTE., vol. 360, no. 4, 1 March 2023 (2023-03-01) , pages 2678-2701, XP093195062, US ISSN: 0016-0032, DOI: 10.1016/j.jfranklin.2022.12.044 * abstract * * page 2678 - page 2691 * | 1-4 | INV. G06N3/084 G06N3/098 |
| A | US 10 370 088 B2 (ALAKAI TECH CORPORATION [US]) 6 August 2019 (2019-08-06) * column 1 - column 13 * * figures 1-5 * | 1-4 | |
| A | SEYYED ALI EMAMI ET AL: "Neural Network-based Flight Control Systems: newline Present and Future", ARXIV.ORG, CORNELL UNIVERSITY LIBRARY, 201 OLIN LIBRARY CORNELL UNIVERSITY ITHACA, NY 14853, 11 June 2022 (2022-06-11), XP091245742, DOI: 10.1016/J.ARCONTROL.2022.04.006 * abstract * * 1, 2, 4 * | 1-4 | **TECHNICAL FIELDS SEARCHED (IPC)** G06N |

The present search report has been drawn up for all claims

| Place of search | Date of completion of the search | Examiner |
|---|---|---|
| The Hague | 21 August 2024 | Keresztury, Bence |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 38 2303

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2024

| Patent document cited in search report | Publication date | Patent family member(s) | Publication date |
|---|---|---|---|
| US 10370088 B2 | 06-08-2019 | AU 2015253168 A1 | 15-12-2016 |
| | | AU 2018208669 A1 | 23-08-2018 |
| | | CA 2947422 A1 | 05-11-2015 |
| | | CA 3140006 A1 | 05-11-2015 |
| | | EP 3137376 A1 | 08-03-2017 |
| | | EP 3748452 A1 | 09-12-2020 |
| | | HU E049822 T2 | 28-10-2020 |
| | | JP 6567652 B2 | 28-08-2019 |
| | | JP 6844811 B2 | 17-03-2021 |
| | | JP 7024950 B2 | 24-02-2022 |
| | | JP 2017514755 A | 08-06-2017 |
| | | JP 2019214370 A | 19-12-2019 |
| | | JP 2021091405 A | 17-06-2021 |
| | | US 2016200421 A1 | 14-07-2016 |
| | | US 2018001994 A1 | 04-01-2018 |
| | | US 2019329868 A1 | 31-10-2019 |
| | | WO 2015168320 A1 | 05-11-2015 |

EPO FORM P0459

For more details about this annex : see Official Journal of the European Patent Office, No. 12/82